(19)

Europäisches
Patentamt

European
Patent Office

Office européen
des brevets

(11)  **EP 4 538 936 A1**

(12)  **EUROPEAN PATENT APPLICATION**

(43) Date of publication:
**16.04.2025  Bulletin 2025/16**

(21) Application number: **24198613.2**

(22) Date of filing: **05.09.2024**

(51) International Patent Classification (IPC):
*G06N 3/0985* (2023.01)

(52) Cooperative Patent Classification (CPC):
**G06N 3/0985**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **09.10.2023  IN 202321067480**

(71) Applicant: **Tata Consultancy Services Limited
Maharashtra (IN)**

(72) Inventors:
• **KADWAY, CHETAN  SUDHAKAR**
  **700160 Kolkata, West Bengal (IN)**
• **MUKHOPADHYAY, SHALINI**
  **700091 Kolkata, West Bengal (IN)**
• **ISLAM, SYED MUJIBUL**
  **700156 Kolkata, West Bengal (IN)**
• **ROY CHOUDHURY, ABHISHEK**
  **700156 Kolkata, West Bengal (IN)**
• **DEY, SWARNAVA**
  **700091 Kolkata, West Bengal (IN)**
• **DEY, SOUNAK**
  **700091 Kolkata, West Bengal (IN)**
• **PAL, ARPAN**
  **700091 Kolkata, West Bengal (IN)**
• **MUKHERJEE, ARIJIT**
  **700091 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(54)  **INTEGRATED PLATFORM ENABLING RAPID AUTOMATED GENERATION OF OPTIMIZED DNNS FOR EDGE DEVICES**

(57)   Building such optimized DNN models model for resource constrained devices require huge amount of workflow setup, engineering skills and research skills. There is a need to automate the process for generation of optimized DNN models for Green analytics. A method and system providing integrated platform for rapid automated generation of Tiny ML models for edge devices by integrating multiple optimization techniques and recommending the mist appropriate technique based on available input parameters is provided. Further one of the optimization technique the Fast-NAS can be generalized across multiple applications and consume 95% less computational power (GPU hours). The enhancement is achieved using a performance evaluation technique for generated models using new metric, a new reward function with adaptive parameters, an early-exit strategy to further expedite the optimization process, and a new NAS flow enhanced with AutoML (Hyper-Parameter Optimization) to minimize human intervention.

FIG. 1B

**EP 4 538 936 A1**

**Description**

The present application claims priority from Indian patent application no. 202321067480, filed on October 9, 2023.

TECHNICAL FIELD

The embodiments herein generally relate to the field of optimization of Deep Neural Networks (DNNs) and, more particularly, to a method and system for integrated platform enabling rapid automated generation of optimized DNNs for edge devices.

BACKGROUND

Edge computing is becoming a preferred choice of Artificial Intelligence (AI)/ Machine Learning (ML) model deployment, as it reduces the cost of running expensive Graphics Processing Unit (GPU) servers in the cloud. Along with reduced server cost, it helps with protecting users' data privacy. Edge computing requires building optimized ML models, also referred to as Tiny ML models or Edge AI models, for resource constrained edge devices. Generating the tiny ML models require a huge amount of workflow setup, engineering skills and research skills. Hence, there is a need to automate the process to generate Tiny ML models and contribute to make analytics Green. Various research paths are being explored by AI researchers to design algorithms and hardware to build optimized Tiny ML models quickly and efficiently. Some of the techniques in literature are listed below:

(a) Efficient Inference practices such as quantization and factorization to lessen the intensity of computations needed for the arithmetic operations (matrix multiplication) that are fundamental to deep learning.
(b) Designing smaller model architectures using architecture search techniques to reduce overall footprint of training and inference.
(c) Selecting efficient Deep Learning (DL) model, such as sparse models and pruned models. When effectively done, this can maintain performance while reducing computation by 3x-10x.
(d) Use of AI accelerators optimized for training and inference, over general-purpose processors, which can improve energy efficiency by 2x-5x.

Reduction in end-to-end time to build and deploy a model at Edge involves huge engineering (embedded systems hardware and software knowledge), workflow setup and research effort. Therefore, it is a technical challenge to choose the correct technique for a combination of data, task, and hardware at hand. Further, it takes immense cost in terms of hiring niche talent, Research and Development (R and D) and systems engineering.

SUMMARY

Embodiments of the present disclosure present technological improvements as solutions to one or more of the above-mentioned technical problems recognized by the inventors in conventional systems.
For example, in one embodiment, a method for rapid generation of optimized Deep Neural Networks (DNNs) for edge devices is provided.
The method includes receiving a plurality of input parameters comprising a target hardware metric constraints of a target edge device, and at least one of i) a training dataset, and ii) a pretrained DNN model trained for a target application.
Further, the method includes selecting one of i) a Fast- Neural Architecture Search (F-NAS) based optimization technique and ii) a non-F-NAS based optimization technique for generating an optimized DNN model customized for deployment on the target edge device to run the target application. The selection is based on availability of the training dataset, availability of the pretrained DNN model, and the target hardware metric constraints. The F-NAS based optimization technique comprises i) a Fast- Neural Architecture Search (F-NAS), and ii) a LTH + F-NAS; and the non-F-NAS based optimization technique comprises i) a EvoPrune technique, ii) a Lottery Ticket Hypothesis (LTH), iii) and an utilities based approach in accordance with the target application.
Furthermore, the method includes generating the optimized DNN model using the F-NAS based optimization technique comprising one of: the LTH+F-NAS if the pretrained DNN model is available and the training dataset is available, wherein the pretrained DNN model is pruned using the LTH pipeline and passed to the F-NAS in form of a student model to generate a search space; and the F-NAS directly if the pretrained DNN model is unavailable, and the training dataset is available. The F-NAS is based on a Reinforcement Learning (RL)-NAS technique using a RL-NAS reward comprising a sigmoid based multi-objective reward function with an exponential decay and generalized for maximization and minimization of Key Performance metrics. The F-NAS comprising: (a) receiving the plurality of input parameters; (b) initializing a RL search space based on a default search space or the student model; (c) initializing hyperparameters based on default values or values derived from user inputs; (d) receiving a ratio of a Scaled Hamming Distance (SHD) episodes among a total number of episodes; (e) initializing a set of default hyperparameters for model training and evaluation for intermediate models generated during a NAS process (206e); and (f) generating the optimized DNN model by combining a RL-based NAS technique with a SHD based metric that reduces a search time. The hamming distance based metric is scaled between bounds 0 to 1 to be used in the RL-NAS reward.

Further, the method includes deploying the optimized DNN model on the target edge device to run the target application.

In another aspect, a system for rapid generation of optimized Deep Neural Networks (DNNs) for edge devices is provided. The system comprises a memory storing instructions; one or more Input/Output (I/O) interfaces; and one or more hardware processors coupled to the memory via the one or more I/O interfaces, wherein the one or more hardware processors are configured by the instructions to

The one or more hardware processors are configured to receive a plurality of input parameters comprising a target hardware metric constraints of a target edge device, and at least one of i) a training dataset, and ii) a pretrained DNN model trained for a target application.

Further, the one or more hardware processors are configured to select one of i) a Fast- Neural Architecture Search (F-NAS) based optimization technique and ii) a non-F-NAS based optimization technique for generating an optimized DNN model customized for deployment on the target edge device to run the target application. The selection is based on availability of the training dataset, availability of the pretrained DNN model, and the target hardware metric constraints. The F-NAS based optimization technique comprises i) a Fast- Neural Architecture Search (F-NAS), and ii) a LTH + F-NAS; and the non-F-NAS based optimization technique comprises i) a EvoPrune technique, ii) a Lottery Ticket Hypothesis (LTH), iii) and an utilities based approach in accordance with the target application.

Furthermore, the one or more hardware processors are configured to generate the optimized DNN model using the F-NAS based optimization technique comprising one of: the LTH+F-NAS if the pretrained DNN model is available and the training dataset is available, wherein the pretrained DNN model is pruned using the LTH pipeline and passed to the F-NAS in form of a student model to generate a search space; and the F-NAS directly if the pretrained DNN model is unavailable, and the training dataset is available. The F-NAS is based on a Reinforcement Learning (RL)-NAS technique using a RL-NAS reward comprising a sigmoid based multi-objective reward function with an exponential decay and generalized for maximization and minimization of Key Performance metrics. The F-NAS comprising: (a) receiving the plurality of input parameters; (b) initializing a RL search space based on a default search space or the student model; (c) initializing hyperparameters based on default values or values derived from user inputs; (d) receiving a ratio of a Scaled Hamming Distance (SHD) episodes among a total number of episodes; (e) initializing a set of default hyperparameters for model training and evaluation for intermediate models generated during a NAS process (206e); and (f) generating the optimized DNN model by combining a RL-based NAS technique with a SHD based metric that reduces a search time. The hamming distance based metric is scaled between bounds 0 to 1 to be used in the RL-NAS reward.

Further, the one or more hardware processors are configured to deploy the optimized DNN model on the target edge device to run the target application.

In yet another aspect, there are provided one or more non-transitory machine-readable information storage mediums comprising one or more instructions, which when executed by one or more hardware processors causes a method for rapid generation of optimized Deep Neural Networks (DNNs) for edge devices.

The method includes receiving a plurality of input parameters comprising a target hardware metric constraints of a target edge device, and at least one of i) a training dataset, and ii) a pretrained DNN model trained for a target application.

Further, the method includes selecting one of i) a Fast- Neural Architecture Search (F-NAS) based optimization technique and ii) a non-F-NAS based optimization technique for generating an optimized DNN model customized for deployment on the target edge device to run the target application. The selection is based on availability of the training dataset, availability of the pretrained DNN model, and the target hardware metric constraints. The F-NAS based optimization technique comprises i) a Fast- Neural Architecture Search (F-NAS), and ii) a LTH + F-NAS; and the non-F-NAS based optimization technique comprises i) a EvoPrune technique, ii) a Lottery Ticket Hypothesis (LTH), iii) and an utilities based approach in accordance with the target application.

Furthermore, the method includes generating the optimized DNN model using the F-NAS based optimization technique comprising one of: the LTH+F-NAS if the pretrained DNN model is available and the training dataset is available, wherein the pretrained DNN model is pruned using the LTH pipeline and passed to the F-NAS in form of a student model to generate a search space; and the F-NAS directly if the pretrained DNN model is unavailable, and the training dataset is available. The F-NAS is based on a Reinforcement Learning (RL)-NAS technique using a RL-NAS reward comprising a sigmoid based multi-objective reward function with an exponential decay and generalized for maximization and minimization of Key Performance metrics. The F-NAS comprising: (a) receiving the plurality of input parameters; (b) initializing a RL search space based on a default search space or the student model; (c) initializing hyperparameters based on default values or values derived from user inputs; (d) receiving a ratio of a Scaled Hamming Distance (SHD) episodes among a total number of episodes; (e) initializing a set of default hyperparameters for model training and evaluation for intermediate models generated during a NAS process (206e); and (f) generating the optimized DNN model by combining a RL-based NAS technique with a SHD based metric that reduces a search time. The hamming distance based metric is scaled between bounds 0 to 1 to be used in the RL-NAS reward.

Further, the method includes deploying the optimized DNN model on the target edge device to run the target application.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for integrated platform enabling rapid automated generation of optimized Deep Neural Networks (DNNs) for edge devices, in accordance with some embodiments of the present disclosure.
FIG. 1B illustrates an architectural overview of the system of FIG. 1A, in accordance with some embodiments of the present disclosure.
FIGS. 2A through 2B (collectively referred as FIG. 2) is a flow diagram illustrating a method for integrated platform enabling rapid automated generation of the optimized DNNs for edge devices, using the system depicted in FIG. 1A and 1B, in accordance with some embodiments of the present disclosure.
FIG. 3 depicts the process flow of a Fast-Neural Architecture Search (F-NAS) optimization technique for generating an optimized DNN model for a target edge device, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Many factors such as Artificial Intelligence (AI)/Machine Learning (ML) task, the availability of training dataset, the availability of existing larger Neural Network Models, the computing constraints on an edge device or target device, the type of platform for the final deployment as so on are critical in selecting the right technique for Neural network (NN) model optimization. Furthermore, selection of optimization technique, Tiny model or optimized model generation and deployment is desired to be time efficient effectively contributing to make analytics Green. Reduction in end-to-end time to build and deploy a model at edge involves huge engineering (embedded systems hardware and software knowledge), workflow setup and research effort.

Embodiments of the present disclosure provide a method and system providing an integrated platform enabling rapid automated generation of optimized Deep Neural Networks (DNNs) for edge devices. The system, also referred to as Edge Wizard provides an automation platform to generate optimized DNNs or Tiny models for resource-constrained target hardware. The system augments and integrates knowledge from domain experts, data scientists, ML Engineers, or developers to select or recommend most appropriate optimization technique based on the target application (the AI/ML task and domain where the task is applied), the availability of training dataset, the availability of existing larger Neural Network (NN) Models, the computing constraints on the target device, and the type of platform for the final deployment. An optimized DNN model is then generated in accordance with the recommended optimization technique. The integrated platform disclosed herein thus saves implementation and maintenance cost of business enterprises by offloading the burden of huge amount of workflow setup, engineering skills and research skills required for edge AI development.

Further, one of the optimization technique disclosed herein, referred to as Fast- Neural Architecture Search (F-NAS), upgrades and accelerates Reinforcement Learning based Neural Architecture Search (RL-NAS), to allow it to be generalized across multiple applications with reduced power consumption of 95% less computational power (Graphical Processing Unit (GPU hours)). The F-NAS improves existing RL-NAS by introducing a model performance evaluation technique with the help of a new metric, a new reward function with adaptive parameters, an early-exit strategy to further expedite the optimization process, and a new NAS flow enhanced with AutoML (Hyper-Parameter Optimization) to minimize human intervention.

Most existing platforms just focus on one ML task and one technique to generate an optimized ML model for resource constrained target hardware. Whereas our platform/system provides support for many ML tasks/use-cases and automatically chooses an appropriate technique from a pool of techniques, to generate optimized ML model based on an intelligent rule-based system. It also supports model generation for a variety of edge computing hardware. Our platform/system is a GUI based tool that reduces development time, reduces required man power, reduces GPU server expense and makes the developers life easier.

Existing approaches to Neural Architecture Search (NAS) often involve high-capacity GPU systems, where the maj or overhead is from the training of candidate models. While the optimization process has been accelerated by various approaches such as differential architecture search techniques (DARTS, PDARTS), it still has a substantial GPU requirement to complete the optimization process. State-of -the-art approaches do not provide search techniques which can run on non-GPU devices. The Faster-NAS disclosed herein can run on CPU server as well, to search Neural Networks Architecture quickly and efficiently.

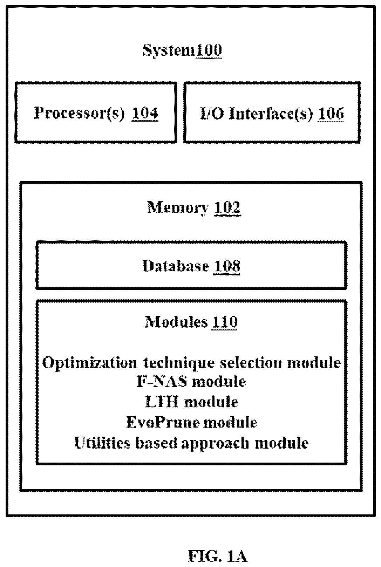

Referring now to the drawings, and more particularly to FIGS. 1A through 3, where similar reference characters denote corresponding features consistently throughout the figures, there are shown preferred embodiments, and these embodiments are described in the context of the following exemplary system and/or method.

FIG. 1A is a functional block diagram of a system 100 providing an integrated platform enabling rapid automated generation of optimized Deep Neural Networks (DNNs) for edge devices, in accordance with some embodiments of the present disclosure.

In an embodiment, the system 100, also referred to as Edge Wizard, includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface enabling users communicate interactively with the system 100, and the like. Further, the I?O interface 106 can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such as an optimization technique selection module to select an appropriate approach based on input parameters. The different techniques provided by the integrated platforms that are intelligently and automatically selected by the optimization technique selection module for generating an optimized DNN model based on availability of the training dataset, availability of the pretrained DNN model, and the target hardware metric constraints include i) a Fast- Neural Architecture Search (F-NAS) based optimization technique and ii) a non-F-NAS based optimization technique. The F-NAS based optimization technique comprises i) a Fast- Neural Architecture Search (F-NAS), and ii) a Lottery Ticket Hypothesis (LTH)+F-NAS. The non-F-NAS based optimization technique comprises i) a EvoPrune technique, ii) a Lottery Ticket Hypothesis (LTH), iii) and an utilities based approach in accordance with the target application.

The system 100 executes the optimization technique selection module based on a rule engine and recommends a optimization technique. However, with additional inputs/ confirmation from the data scientist and domain expert as depicted in the architectural overview of the system 100 the appropriate technique can be selected and the respective module corresponding to that technique enables generation of the optimized DNN model to be deployed on the target device Thus, the system 100 offers multiple optimization technique implementation at a single point, reducing effort of new sets up for different optimization technique requirements. The rule engine is built based on knowledge derived from data scientists, domain experts and the like. An example rule engine is depicted in the table within the optimization technique selection module. The rule engine can be further expanded to scale to address inclusion of newer optimization techniques and newer rules. Furthermore, the system 100 interacts with a user via the UI and requests for providing additional input parameters required by the optimization techniques selected.

The edge wizard ( system 100) optimization techniques:

**EvoPrune:** This optimization technique is specifically selected when a pretrained DNN is available, but training data set is not available for generation of optimized DNN model. The EvoPrune generates pruned DNN models satisfying the target edge device constraints. The pruned DNN model can then be deployed on the target hardware The technique is based on applicants' earlier filed patent application titled Method and System for Jointly Pruning And Hardware Acceleration of PreTrained Deep Learning Models, Indian Patent Application Number 202221043520 filed on 29 July 2022 at IPO. Herein, the user, on system request/prompt is requested to select (i) a plurality of deep neural network (DNN) models, (ii) a plurality of hardware accelerators comprising of one or more processors, a plurality of target performance indicators comprising of a target accuracy, a target inference latency, a target model size, a target network sparsity, and a target energy, and (iii) a plurality of user options comprising of a first pruning search, and a secondary pruning search. The plurality of DNN models and the plurality of hardware accelerators are transformed into a plurality of pruned hardware accelerated DNN models based on at least one of the user options. The first pruning search option executes a hardware pruning search technique, to perform a search on each DNN model and each processor based on at least one of a performance indicator and an optimal pruning ratio. The second pruning search option executes an optimal pruning search technique, to perform a search on each layer with corresponding pruning ratio. Further, an optimal layer associated with the pruned hardware accelerated DNN model is identified based on the user option. The layer assignment sequence technique creates a static load distributor by partitioning the optimal layer of the DNN model into a plurality of layer sequences and assigning each layer sequence to corresponding processing element of hardware accelerators.

LTH: This optimization technique is preferred when pruning method is preferred for optimized model generation, and the training dataset is available..

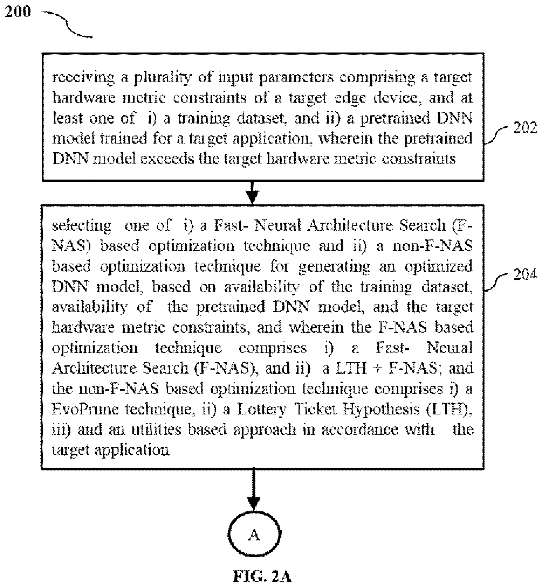

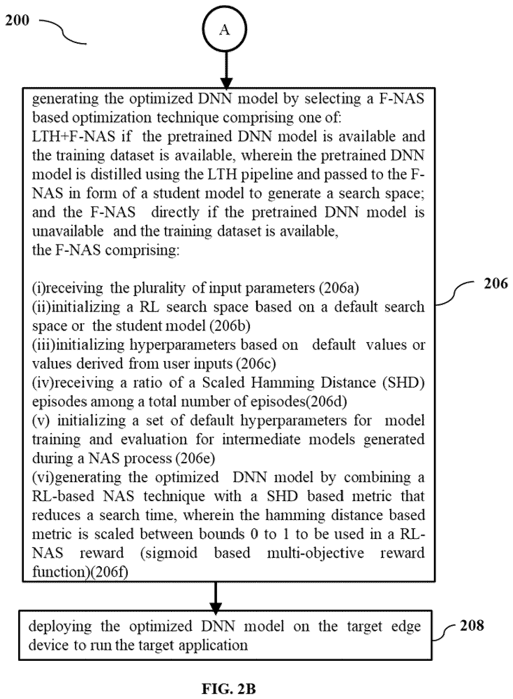

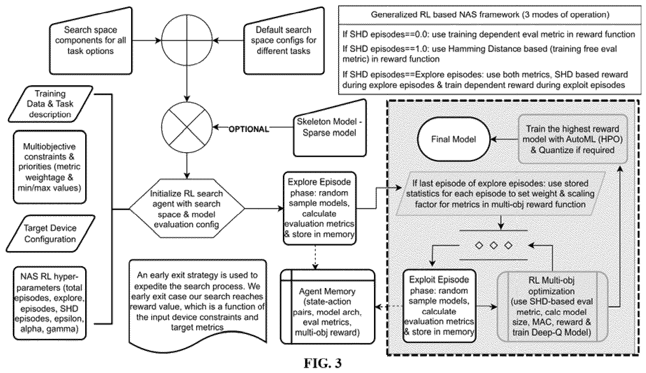

F-NAS: This technique is used when no pretrained DNN models are available and the optimized DNN model is to be generated for the target device using the training dataset available. This optimization approach is based on NAS algorithm and provides a technical improvement in search speed over the RL-based NAS of the applicant's earlier filed patent application titled Automated Creation Of Tiny Deep Learning Models Based On Multi-Objective Reward Function, Indian Patent Application Number 202221022177 filed at IPO on April 13, 2022. The F-NAS is explained in detail in conjunction with FIG. 2 and FIG. 3

LTH+F-NAS: Reduces compute time significantly for complex use cases. LTH-FNAS is useful in cases where there is a large model available, which has good accuracy, but is suitable for the target device. E.g. ECG AF and Arrhythmia classification use case (4-class single lead ECG dataset, Physionet 2017). Here Benchmark model has a size of 40 MB, but good accuracy. So this model is taken by LTH module, reduced, and converted into a student model by knowledge distillation/ pruning. This student model is then used to generate search space for NAS. Details of the module is available in the patent 497675-046. The upgrade to this module is the implementation of FNAS additional features on NAS to further reduce search and optimization time. The LTH+NAS approach is based in applicants earlier filed patent application titled METHOD AND SYSTEM FOR CREATING TINY DEEP NEURAL NETWORK MODEL, Indian Provisional Patent Application Number 202321025696 filed at IPO on 5 April 2023

**Utilities based approach:** This approach is used when conversion of model structures between platforms is required, irrespective of pretrained models are available or not, or training dataset is available or not. Utilities is basically an engineering enabling module which provides conversion of model structures between ML frameworks/-platforms like Tensor Flow (TF)™ to PyTorch™, PyTorch to TF, PyTorch to C or the like as is needed for deployment on target device.

The plurality of modules 110 can further include modules for implementing each of the optimization techniques such as a F-NAS module, a LTH module, a EvoPrune module and an Utilities based approach module.

Further, the plurality of modules 110 include programs or coded instructions that supplement applications or functions performed by the system 100 for executing different steps involved in the process of rapid automated selection of optimized Deep Neural Networks (DNNs) for edge devices, being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110.

Although the data base 108 is shown internal to the system 100, it will be noted that, in alternate embodiments, the database 108 can also be implemented external to the system 100, and communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 2 through FIG. 3.

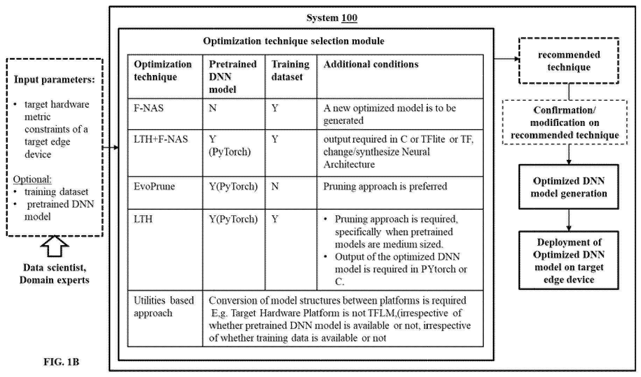

FIGS. 2A through 2B (collectively referred as FIG. 2) is a flow diagram illustrating a method 200 for integrated platform enabling rapid automated generation of the optimized DNNs for edge devices, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured by the instructions to receive the plurality of input parameters. One of the necessary input parameter are target hardware metric constraints defining an accuracy, a latency, a runtime memory usage, and a size of the optimized DNN model (also referred to as a Tiny model or TinyMl, model) and the like in accordance with the target device. The model generated is to be customized for the target device. Further, based on availability, the system 100 can optionally also receive at least one of i) a training dataset, and ii) a pretrained DNN model trained for a target application. It can be understood that the pretrained DNN model exceeds the target hardware metric constraints and hence needs the optimization to be applied for deployment on the target device.

At step 204 of the method 200, the one or more hardware processors 104 are configured by the instructions to select one of i) the Fast- Neural Architecture Search (F-NAS) based optimization technique and ii) the non-F-NAS based optimization technique for generating the optimized DNN model, customized for deployment on the edge device to run the target application, wherein the selection is based on availability of the training dataset, availability of the pretrained DNN model, and the target hardware metric constraints. As depicted in FIG. 1B the F-NAS based optimization technique comprises i) the Fast- Neural Architecture Search (F-NAS), and ii) the LTH + F-NAS. The non-F-NAS based optimization technique comprises i) the EvoPrune technique, ii) the Lottery Ticket Hypothesis (LTH), iii) and the utilities based approach in accordance with the target application.

Selection of the appropriate technique is implemented as discussed in conjunction with the optimization technique selection module's rule engine depicted in FIG. 1B. Further, confirmation! modification is received from the domain expert, data scientist before finalizing the optimization technique.

At step 206 of the method 200, the one or more hardware processors 104 are configured by the instructions to generate the optimized DNN model. The F-NAS based optimization technique comprises: i) the LTH+F-NAS if the pretrained DNN model is available and the training dataset is available, wherein the pretrained DNN model is pruned using the LTH pipeline and passed to the F-NAS in form of a student model to generate a search space; and ii) the F-NAS directly if the pretrained DNN model is unavailable, and the training dataset is available. The F-NAS is built over a Reinforcement Learning (RL)-NAS technique using a RL-NAS reward comprising sigmoid based multi-objective reward function with an exponential decay and generalized for maximization and minimization Key Performance metrics (refer to equation 5 and 6). The key performance metrics of the RL-reward constitute of these target hardware constraint metrics. Accuracy is used alternately with SHD. Other hardware metrics are Size, latency, runtime memory, multiply-accumulate operations, power, etc. The mathematical representation and explanation of the multi-objective reward function is later explained The F-NAS approach comprises the following steps 206a through 206f as below and further elaborated in conjunction with FIG. 3:

1. Receive the plurality of input parameters (206a). The Training dataset along with a data-loader and a target application are obtained from users of the system such as the data scientist, domain experts, developers. The AI/ML task associated with the target application is to be chosen from the available list of options provided by the system 100. The AI/ML task herein refers to , for example Image Classification, Time Series Classification, Object Detection, Natural Language Processing (NLP) etc. The target application is specific, for example, ECG/Physiological Signal Classification or Activity Detection are applications under Time Series Classification. The significance is that, for example, if the target application in medical-domain, accuracy of the model output carries higher weightage and priority compared to, say, an Activity of Daily Living (ADL) or fitness Application.

2. Initialize a RL search space based on a default search space or the student model (206b)

3. Initialize hyperparameters based on default values or values derived from user inputs (206c). The initialization hyperparameters also include the early exit parameter $t_{ratio}$ (refer equation 7) either set to default value or provided by the user

4. Receive a ratio of a Scaled Hamming Distance (SHD) episodes among a total number of episodes (206d)

5. Initialize a set of default hyperparameters for model training and evaluation for intermediate models generated during a NAS process (206e)

6. Generate the optimized DNN model by combining a RL-based NAS technique with a SHD based metric that reduces a search time (206f). The hamming distance based metric is scaled between bounds 0 to 1 to be used in a RL-NAS reward. As mentioned, the RL-NAS reward of the F-NAS is a sigmoid based multi-objective reward function with an exponential decay and generalized for maximization and minimization metrics. The F-NAS generates the optimized DNN model by selecting an intermediate model from among the intermediate models that has a highest reward value; and training the selected intermediate model using Auto ML (Hyperparameter Optimization) to obtain a best performing optimized DNN model for the target application and the training dataset.

The F-NAS utilizes an early exit strategy by terminating search for the intermediate models upon reaching a Target Reward Value, which is a function of the input device constraints and target hardware metric constraints.

Once the optimized DNN model is generated, then at step 208 of the method 200, the one or more hardware processors 104 are configured by the instructions to deploy the optimized DNN model on the target edge device to run the target application.

FIGS. 3 depicts the process flow of a Fast-Neural Architecture Search (F-NAS) optimization technique for generating the optimized DNN model for the target edge device, in accordance with some embodiments of the present disclosure.

The F-NAS enables reduction in architecture search time and computational overhead by implementing a technique to evaluate model performance, eliminating the requirement to train the models in each episode of RL based NAS. This involves the disclosed step of combining the RL-based Neural Architecture Search technique with a scaled Hamming Distance based metric, to reduce search time by at least 95% (in general the acceleration can be 20x and higher). Instead of training newly sampled model each episode, the approach disclosed that uses the Hamming Distance based metric replaces the metric value obtained after training. This Hamming Distance based metric is scaled between bounds 0 to 1, so that it becomes convenient to use it in NAS reward function.

The F-NAS process flow in conjunction with FIG. 3 is described below

1. The plurality of inputs from a user (data scientist/domain expert) are received by the system 100. The inputs include training dataset, a task description (obtained from the target application), hardware metric constraints of the target edge device, and a set of hyperparameters and settings which can be set to default values or derived from user inputs.

2. The F-NAS based optimization technique is used during two optimization approaches. The first one is LTH+F-NAS, which is selected if the pretrained DNN model is available, and the training dataset is available. The pretrained DNN model is pruned using the LTH pipeline and passed to the F-NAS in form of a student model to generate a search space. The system 100 directly selected F-NAS without the LTH if the pretrained DNN model is unavailable, and the training dataset is available.

3. Once the F-NAS is identified as the optimization technique, the F-NAS module (module 110) of the system 100 initializes the RL search space based on a default search space or the student model as in step 206b.

4. Thereafter, the F-NAS module exploring the RL search space for each explore episode of a plurality of explore episodes, via a faster NAS technique (RL-based NAS technique + Hamming distance-based metric). The steps for exploring the RL search space comprise:

(i) Sampling a plurality of random models, from the RL search space based on compliance of the plurality of domain constraints and generating a plurality of valid models. The plurality of domain constraints comprises a layer ordering, a parameter ordering, and the plurality of target hardware metric constraints set by the user. The plurality of domain constraints refer to a set of domain-derived rules for designing a Deep Neural Network. One such example is: The first layer of a network should not be MaxPooling 'OR' There cannot be 2 MaxPooling layers consecutively ' OR' The Kernel size, Stride and Pool size for selected layers cannot be higher than the resulting tensor dimension from the previous layer.

(ii)Calculating a plurality of Key Performance metrics of the RL-NAS reward, for each of the plurality of valid models, wherein a scaled hamming distance (SHD) based metric among the plurality of Key Performance metrics is scaled between 0 and 1, that enables to reduce the search time. Further, at least one of (i) the SHD based metric, and (ii) an accuracy-based metric is used in the RL-NAS reward during the exploring and exploiting the RL search space.

**The scaling of hamming distance between 0 to 1 is in accordance with equations below:**

$$K_H = \begin{pmatrix} N_A - d_H(c_1, c_1) & \cdots & N_A - d_H(c_1, c_N) \\ \vdots & \ddots & \vdots \\ N_A - d_H(c_N, c_1) & \cdots & N_A - d_H(c_N, c_N) \end{pmatrix} \quad (1)$$

$$K = \sum_l K_H^l \quad (2)$$

$$A = K/\max(K) \quad (3)$$

where K is the metric and $A = K/\max(K)$ is the scaling operation.

Equation 1 refers to a matrix of size $N \times N$, where N is the number of data samples chosen from training set. N is a subset of samples from a training data set. Each row in Matrix $K_H$ corresponds to i^th sample from N samples, and each column in those rows tells how similar the $i^{th}$ sample is to $i^{th}$ sample. Where, $d_H$ is the Hamming distance between $i^{th}$ & $i^{th}$ sample activation value vector for hidden layer "l". $N_A$ is the number of neurons in the activation layer of hidden layer "l".

Higher the $(N_A - d_H)$, higher the activation similarity. Equation 2 indicates summation for each layer wise $K_H^l$ (NxN) matrix.

Equation 3 depicts normalizing the K matrix in equation 2, such that all values are between 0 & 1.

For the $N \times N$ matrix above, 3 row vectors j, r & $r_2$ are initialized. j is row vector of all ones. r row vector contains value from 1 to N. r_2 is the square of vector r containing square of each value from 1 to N.

Thus, i=(1,2,...,d) and $r_2 = (1^2, 2^2, ..... d^2)$. Then:

$$n = jAj^T \ (the \ sum \ of \ the \ entries \ of \ A)$$

$$\sum x = rAj^T$$

$$\sum y = jAr^T$$

$$\sum x^2 = r_2 Aj^T$$

$$\sum y^2 = jAr_2^T$$

$$\sum xy = rAr^T$$

$$r = \frac{n \sum xy - \sum x \sum y}{\sqrt{n \sum x^2 - (\sum x)^2} \sqrt{n \sum y^2 - (\sum y)^2}} \quad (4)$$

n = summation of all values in matrix A, wherein A (scaled metrics) is one of the i performance metrics ($P_i$).

Summation (x) does column wise weighted summation A matrix (where r vector is the weights) followed by summation of newly obtained column wise weighted values.

Summation (y) and other remaining terms does the same thing either row-wise or column wise.

Then equation 4 uses all these terms to yield a value between 0 & 1. If the value is high means diagonals of A matrix are high & non-diagonals are low. If the value is low means diagonals as well as non-diagonals of matrix A are high.

The higher the value, the higher the representation power of Neural Network used to generate matrix A. So that, even without training we can tell if the neural network will achieve high performance or not.

Thus, the RL-NAS reward (sigmoid based multi-objective reward function) is formulated as below, wherein the SHD is one of the metrics in the ith performance metric $P_i$, with scaled value provided by A, and $P_{scale}$ is the scaling factor for performance metrics other than

$$\text{SHD} Z_{i=} w_i * \frac{P_i}{P_{scale}} - C \tag{5}$$

$$R = \frac{\sum_i W_i\, \sigma(z_i^{max}) + \sum_j W_j\, \sigma(z_i^{min})}{\sum_i W_i + \sum_j W_j} \tag{6}$$

$z_i^{max}$ and $z_i^{min}$ are the scaled performance metrics to be minimised and maximised respectively: eg. Accuracy and Hamming Distance are maximising metrics, Latency and size are minimizing metrics.

(iii) Storing the plurality of Key Performance metrics of the RL-NAS reward, and state action pairs corresponding to the each of the plurality of valid models in a knowledgebase (database 108).

(iv) Setting a weight and a scaling factor of the RL-NAS reward for a last episode of the plurality of episodes, using the stored plurality of Key Performance metrics of the RL-NAS reward corresponding to remaining episodes of the plurality of episodes.

(v) Calculating, multi-objective reward value for each valid model of the plurality of valid models sampled using the corresponding weight and the scaling factor of the RL-NAS reward that is formulated as the sigmoid based multi-objective reward function. The selection of the multi-objective reward value depends on the value of scaled Hamming distance (SHD) episodes provided by the user.

(vi) Training a DNN model (also referred to as Deep-Q Model or Deep Q network, or RL agent DQN model), using the stored state-action pairs and the multi-objective reward value, wherein the trained Deep-Q Model is used for sampling a plurality of new models during exploitation episodes.

5. Exploiting the RL search space for each exploit episode of a plurality of exploit episodes, using the trained Deep-Q Model, the steps for exploiting the RL search space comprises:

(i) Sampling a plurality of new models, via the trained Deep-Q Model (DNN model), from the RL search space based on compliance of a plurality of constraints and generating a plurality of new valid models. The plurality of constraints comprises a layer ordering, a parameter ordering, and the plurality of hardware metric constraints set by the user. Sampling of the plurality of new models via the trained Deep-Q Model improves RL-NAS reward value corresponding to the each of the NAS reward functions.

(ii) Calculating the plurality of Key Performance metrics of the RL-NAS reward, for each of the plurality of new valid models, wherein a scaled hamming distance (SHD) based metric among the plurality of Key Performance metrics is scaled between 0 and 1, is formulated to reduce the search time, and wherein at least one of (i) the SHD based metric, and (ii) an accuracy-based metric is used in the RL-NAS reward during the exploring and exploiting the RL search space.

(iii) Storing the plurality of Key Performance metrics of the NAS reward function, and state action pairs corresponding to the each of the plurality of new valid models in the knowledgebase.

(iv) Calculating, the multi-objective reward value for each new valid model of the plurality of new valid models sampled using the corresponding weight and the scaling factor of the RL-NAS reward that is formulated as the sigmoid based multi-objective reward function, wherein selection of the multi-objective reward value depends on value of the scaled Hamming distance (SHD) episodes provided by the user.

(v) Training the Deep-Q Model, using the stored state-action pairs and the multi-objective reward values, for a set of top reward values of the multi-objective reward values.

6. Selecting the DNN model (from among the multiple intermediate models created during the explore and exploit process) that has highest reward value of the set of top reward values and training the selected DNN model using AutoMI, (Hyperparameter Optimization), generating the optimized DNN model. If the SHD episodes= 1.0, i.e., the RL search space is explored and exploited with SHD-based reward function and the AutoML is performed at the end of search Process when all episodes are completed. If SHD episodes==Explore episodes, the AutoMI, is performed twice, once after exploring episodes complete and once after all episodes complete. The early exit strategy is used to expedite the search process, wherein the search process is terminated upon reaching a Target Reward Value, which is a function of the input device constraints and target metrics. The target objective metric values input by user are used to scale the reward in an adaptive manner. This involves creating an intermediate target at x% of the user-specified hard target constraint, (for example, 80% of available space on a given hardware platform) and scaling the reward to have value = 1, which can be early exit criterion for the NAS algorithm.

7. If the value is not attained early, the search is performed for TOTAL_EPISODES, following which the best reward model is selected. The Target Reward Value is given by the equation below:
The Target Reward Value and Early Exit Criterion are given in the Equations below:

$$\text{Target Reward Value } R_t = R(t_{ratio} * \{P_{i\_user}\}) \qquad (7)$$

$$\text{Scaled Reward, } R_s = (R_{est} - R_{min}) / (R_t - R_{min}) \qquad (8)$$

Where,

$t_{ratio}$ = minimum ratio of target to be selected as optimal output.
$P_{i\_user}$ = $i^{th}$ Target Performance metric set by user input.
$R_{est}$ = estimated Reward (R) for a given episode.
$R_{min}$ = Minimum Reward value, depends on scale.

*Recommended value for $t_{ratio}$ = 0.9* <u>Early Exit Criterion : $R_s$ = 1</u>

8. Performing quantization on the obtained optimized DNN model, generating a quantized model. Thus, quantization is performed at the very end after AutoMI, (HPO) if required, the final Quantized Model is obtained as output to be deployed on the target edge device.

**Implementation and Results:** The system 100 disclosed herein has been implemented in a lossless image compression application, where the described accelerated architecture search technique was used to generate tiny, fully connected neural networks for image compression. The optimization of performance metrics and behavior of the reward function are described in the Table 1 below.

**Table 1:**

| Lossless Compression Model Name | SOTA | Deep Q-learning based NAS for Embedded/Edge device | **Faster-NAS** |
|---|---|---|---|
| Model Size | 2.7 MB | 32.6 KB | 17.2 KB |
| Param Count | 702K | 515 | 259 |
| Original File Size | 17.98 MB | 17.98 MB | 17.98 MB |
| Compressed File Size | 11.49 MB | 11.49 MB | 11.49 MB |
| Compression Ratio | 36.09% | 36.08% | 36.08% |
| Model Search Time | NA | 75 min | 200 sec |

Thus, the method and system disclosed herein provides:
**Faster-NAS (F-NAS) due to new model performance evaluation metric:** The F-NAS disclosed herein enables reduction in the model architecture search time and computational overhead by implementing a novel technique to evaluate model performance, eliminating the requirement to train the models in each episode of RL based NAS. The system combines the RL-based Neural Architecture Search technique with a scaled Hamming Distance based metric, to reduce search time by at least 95% (in general the acceleration can be 20x and higher). Instead of training newly sampled model each episode, the formulation of Hamming Distance based metric replaces the metric value obtained after training. This Hamming Distance based metric is scaled between bounds 0 to 1, so that it becomes convenient to use it in NAS reward function.
**Sigmoid based multi-objective reward function** with adaptively **setting the reward hyperparameters (weight & scaling factors of each metric in reward function):** This RL-NAS reward is revised version of exponential decay based multi-objective expression from the applicant's earlier filed Indian patent application number 202221022177. It is further generalized for maximization and minimization of Key Performance metrics. As the RL based NAS algorithm does random exploration in early episodes and exploitation in later remaining episodes, the random exploration is referred to as explore episodes. The statistics collected for each metric term of reward function during explore episodes is then used to adaptively change weight & scaling factors of each metric in reward.

**Generalized NAS framework:** A generalized case, where both SHD-based reward and Accuracy-based reward can be used in the exploration-exploitation episodes as per requirement. Due to this generalization, the system offers 3 ways to run NAS. First, where Accuracy-based reward is used in both exploration & exploitation epochs. Second the F-NAS, where SHD-based reward is used in both exploration & exploitation epochs. Third, a combination of SHD-based reward in exploration epochs & Accuracy-based reward in exploitation epochs is used. The ratio of exploration and exploitation episodes can also be tuned by user of the system.

**Early exit search:** The early-exit strategy is based on the adaptive reward function. The target hardware metric constraints (values) input by user are used to scale the reward in an adaptive manner. This involves creating an intermediate target at x% of the user-specified hard target constraint, (for example, 80% of available space on a given hardware platform) and scaling the reward to have value = 1, which can be early exit criterion for the NAS algorithm.

**NAS flow enhanced with AutoML (Hyperparameter Optimization):** The addition of AutoMl, (Hyperparameter Optimization or HPO) enables to optimize the training parameters of the NAS-generated models (intermediate models), and minimize the effort required by developer/domain expert/data science/ML Engineer. For the accuracy metric based reward function and the SHD metric based reward function mentioned in the generalized NAS framework, once the NAS has generated the final model with highest reward, AutoML is run on best NAS generated model to train it & get most performance out of it. For reward function and combination of SHD and accuracy, AutoMl, (HPO) can be run on best model found in explore episodes and then use the best-found hyper-parameters for remaining exploitation episodes.

**Use case Example depicting significance of the system 100 or the Edge Wizard in time efficient and computation efficient optimized model generation:** One of the examples where the Edge Wizard (system 100) has been used to generate smaller, faster models with same accuracy performance, and lesser time and effort in model design, is the use-case of 'Unobtrusive vision-based Assembly line Quality Inspection' for a car manufacturing company. The problem addressed here is an image classification problem in a controlled environment, where multiple models might be required with the change in design and low inference latency is necessary to reduce loss. Following a conventional approach, building the suitable model by DL expert took nearly 3-5 weeks' time, during which a suitable small model was designed and optimized manually with the help of available tools by the domain experts. The target device constraints was a Raspberry-pi (R-pi)™ board with available memory of 1MB. A model with 100% accuracy was designed, with 655 kB model size, and 59 milli seconds (ms) inference latency.

The same task was passed to the Edge Wizard with the dataset as input, and target device constraints as the R-pi board with available memory of 1MB. With the edge wizard, there is no need of new setup for a new optimization approach.. Since input dataset and device constraints are available, the Edge Wizard providing ready set up for multiple optimization approaches, recommended the NAS path. The model optimization took up to 2 days at most, with 100% accuracy with 90 kB model size, and 20.35 milli seconds (ms) inference latency. Thus, this clearly shows the utility of the Edge Wizard in real-life applications. It can be noted that 2 days was the time taken for NAS. However, when F-NAS is used this time was reduced to a few hours.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components.

For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200) for rapid generation of optimized Deep Neural Networks (DNNs) for edge devices, the method comprising:

receiving (202), via one or more hardware processors, a plurality of input parameters comprising a target hardware metric constraints of a target edge device, and at least one of i) a training dataset, and ii) a pretrained DNN model trained for a target application;

selecting (204), via the one or more hardware processors, one of i) a Fast- Neural Architecture Search (F-NAS) based optimization technique and ii) a non-F-NAS based optimization technique, wherein the selection is based on availability of the training dataset, availability of the pretrained DNN model, and the target hardware metric constraints, and wherein the F-NAS based optimization technique comprises i) a Fast- Neural Architecture Search (F-NAS), and ii) a LTH + F-NAS; and the non-F-NAS based optimization technique comprises i) a EvoPrune technique, ii) a Lottery Ticket Hypothesis (LTH), iii) and an utilities based approach in accordance with the target application; and

generating (206), via the one or more hardware processors, an optimized DNN model customized for deployment on the target edge device to run the target application using the F-NAS based optimization technique comprising one of:

the LTH+F-NAS if the pretrained DNN model is available and the training dataset is available, wherein the pretrained DNN model is pruned using the LTH pipeline and passed to the F-NAS in form of a student model to generate a search space; and

the F-NAS directly if the pretrained DNN model is unavailable and the training dataset is available, wherein the F-NAS is based on a Reinforcement Learning (RL)-NAS technique using a RL-NAS reward comprising a sigmoid based multi-objective reward function with an exponential decay and generalized for maximization and minimization of Key Performance metrics, the F-NAS comprising:

receiving the plurality of input parameters (206a);
initializing a RL search space based on a default search space or the student model (206b);
initializing hyperparameters based on default values or values derived from user inputs including an early exit parameter (206c);

receiving a ratio of a Scaled Hamming Distance (SHD) episodes among a total number of episodes (206d);

initializing a set of default hyperparameters for model training and evaluation for intermediate models generated during a NAS process (206e); and

generating the optimized DNN model by combining a RL-based NAS technique with a SHD based metric that reduces a search time (206f),

wherein the hamming distance based metric is scaled between bounds 0 to 1 to be used in the RL-NAS reward.

2. The method as claimed in claim 1, comprising deploying (208), via the one or more hardware processors, the optimized DNN model on the target edge device to run the target application.

3. The method as claimed in claim 1, wherein an optimization technique from among the non-F-NAS based optimization technique for generating the optimized DNN model is selected as:

(i) the EvoPrune if the pretrained DNN model is available, and the training dataset is unavailable;
(ii) only the LTH if the pretrained DNN model is available, the training dataset is available and output of the optimized DNN model is required in a specific platform; and
(iii) the utilities based approach if conversion of DNN model structures between platforms is required, irrespective of whether the pretrained DNN model is available or unavailable, and whether the training dataset is available or unavailable.

4. The processor implemented method as claimed in claim 1, wherein the F-NAS utilizes an early exit strategy by terminating search for the intermediate models upon reaching a Target Reward Value, which is a function of the input device constraints and target hardware metric constraints.

5. The processor implemented method as claimed in claim 1, wherein the F-NAS generates the optimized DNN model by:
selecting an intermediate model from among the intermediate models that has a highest reward value; and
training the selected intermediate model using AutoMI, for hyperparameter optimization to obtain a best performing optimized DNN model for the target application and the training dataset.

6. A system (100) for rapid generation of optimized Deep Neural Networks (DNNs) for edge devices , the system (100) comprising:

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive a plurality of input parameters comprising a target hardware metric constraints of a target edge device, and at least one of i) a training dataset, and ii) a pretrained DNN model trained for a target application;
select one of i) a Fast- Neural Architecture Search (F-NAS) based optimization technique and ii) a non-F-NAS based optimization technique for generating an optimized DNN model customized for deployment on the target edge device to run the target application, wherein the selection is based on availability of the training dataset, availability of the pretrained DNN model, and the target hardware metric constraints, and wherein the F-NAS based optimization technique comprises i) a Fast- Neural Architecture Search (F-NAS), and ii) a LTH + F-NAS; and the non-F-NAS based optimization technique comprises i) a EvoPrune technique, ii) a Lottery Ticket Hypothesis (LTH), iii) and an utilities based approach in accordance with the target application; and
generate the optimized DNN model using the F-NAS based optimization technique comprising one of:

the LTH+F-NAS if the pretrained DNN model is available and the training dataset is available, wherein the pretrained DNN model is pruned using the LTH pipeline and passed to the F-NAS in form of a student model to generate a search space; and
the F-NAS directly if the pretrained DNN model is unavailable and the training dataset is available, wherein the F-NAS is based on a Reinforcement Learning (RL)-NAS technique using a RL-NAS reward comprising a sigmoid based multi-objective reward function with an exponential decay and generalized for maximization and minimization of Key Performance metrics, the F-NAS comprising:

receiving the plurality of input parameters;
initializing a RL search space based on a default search space or the student model (206b);
initializing hyperparameters based on default values or values derived from user inputs including an early exit parameter;
receiving a ratio of a Scaled Hamming Distance (SHD) episodes among a total number of episodes;
initializing a set of default hyperparameters for model training and evaluation for intermediate models generated during a NAS process; and
generating the optimized DNN model by combining a RL-based NAS technique with a SHD based metric that reduces a search time,

wherein the hamming distance based metric is scaled between bounds 0 to 1 to be used in the RL-NAS reward.

7. The system as claimed in claim 6, wherein the one or more hardware processors are configured to deploy the optimized DNN model on the target edge device to run the target application.

8. The system as claimed in claim 6, wherein an optimization technique from among the non-F-NAS based optimization technique for generating the optimized DNN model is selected as:

(i) the EvoPrune if the pretrained DNN model is available, and the training dataset is unavailable;
(ii) only the LTH if the pretrained DNN model is available, the training dataset is available and output of the optimized DNN model is required in a specific platform; and
(iii) the utilities based approach if conversion of DNN model structures between platforms is required, irrespective of whether the pretrained DNN model is available or unavailable, and whether the training dataset is available or unavailable.

9. The system as claimed in claim 6, wherein the F-NAS utilizes an early exit strategy by terminating search for the intermediate models upon reaching a Target Reward Value, which is a function of the input device constraints and target hardware metric constraints.

10. The system as claimed in claim 6, wherein the F-NAS generates the optimized DNN model by:
selecting an intermediate model from among the intermediate models that has a highest reward value; and
training the selected intermediate model using AutoMI, for hyperparameter optimization to obtain a best performing optimized DNN model for the target application and the training dataset.

11. One or more non-transitory machine-readable information storage mediums comprising one or more instructions which when executed by one or more hardware processors cause:
receiving, a plurality of input parameters comprising a target hardware metric constraints of a target edge device, and at least one of i) a training dataset, and ii) a pretrained DNN model trained for a target application;

selecting, one of i) a Fast- Neural Architecture Search (F-NAS) based optimization technique and ii) a non-F-NAS based optimization technique, wherein the selection is based on availability of the training dataset, availability of the pretrained DNN model, and the target hardware metric constraints, and wherein the F-NAS based optimization technique comprises i) a Fast- Neural Architecture Search (F-NAS), and ii) a LTH + F-NAS; and the non-F-NAS based optimization technique comprises i) a EvoPrune technique, ii) a Lottery Ticket Hypothesis (LTH), iii) and an utilities based approach in accordance with the target application; and
generating, an optimized DNN model customized for deployment on the target edge device to run the target application using the F-NAS based optimization technique comprising one of:

the LTH+F-NAS if the pretrained DNN model is available and the training dataset is available, wherein the pretrained DNN model is pruned using the LTH pipeline and passed to the F-NAS in form of a student model to generate a search space; and
the F-NAS directly if the pretrained DNN model is unavailable and the training dataset is available,
wherein the F-NAS is based on a Reinforcement Learning (RL)-NAS technique using a RL-NAS reward comprising a sigmoid based multi-objective reward function with an exponential decay and generalized for maximization and minimization of Key Performance metrics, the F-NAS comprising:

receiving the plurality of input parameters;

initializing a RL search space based on a default search space or the student model;

initializing hyperparameters based on default values or values derived from user inputs including an early exit parameter;

receiving a ratio of a Scaled Hamming Distance (SHD) episodes among a total number of episodes;

initializing a set of default hyperparameters for model training and evaluation for intermediate models generated during a NAS process; and

generating the optimized DNN model by combining a RL-based NAS technique with a SHD based metric that reduces a search time,

wherein the hamming distance based metric is scaled between bounds 0 to 1 to be used in the RL-NAS reward.

12. The one or more non-transitory machine-readable information storage mediums as claimed in claim 11, comprising deploying, via the one or more hardware processors, the optimized DNN model on the target edge device to run the target application.

13. The one or more non-transitory machine-readable information storage mediums as claimed in claim 11, wherein an optimization technique from among the non-F-NAS based optimization technique for generating the optimized DNN model is selected as:

(i) the EvoPrune if the pretrained DNN model is available, and the training dataset is unavailable;

(ii) only the LTH if the pretrained DNN model is available, the training dataset is available and output of the optimized DNN model is required in a specific platform; and

(iii) the utilities based approach if conversion of DNN model structures between platforms is required, irrespective of whether the pretrained DNN model is available or unavailable, and whether the training dataset is available or unavailable.

14. The one or more non-transitory machine-readable information storage mediums as claimed in claim 11, wherein the F-NAS utilizes an early exit strategy by terminating search for the intermediate models upon reaching a Target Reward Value, which is a function of the input device constraints and target hardware metric constraints.

15. The one or more non-transitory machine-readable information storage mediums as claimed in claim 11, wherein the F-NAS generates the optimized DNN model by:

selecting an intermediate model from among the intermediate models that has a highest reward value; and

training the selected intermediate model using AutoMI, for hyperparameter optimization to obtain a best performing optimized DNN model for the target application and the training dataset.

System**100**

Processor(s) **104**

I/O Interface(s) **106**

Memory **102**

Database **108**

Modules **110**

Optimization technique selection module
F-NAS module
LTH module
EvoPrune module
Utilities based approach module

FIG. 1A

**System 100**

**Optimization technique selection module**

| Optimization technique | Pretrained DNN model | Training dataset | Additional conditions |
|---|---|---|---|
| F-NAS | N | Y | A new optimized model is to be generated |
| LTH+F-NAS | Y (PyTorch) | Y | output required in C or TFlite or TF, change/synthesize Neural Architecture |
| EvoPrune | Y(PyTorch) | N | Pruning approach is preferred |
| LTH | Y(PyTorch) | Y | • Pruning approach is required, specifically when pretrained models are medium sized.<br>• Output of the optimized DNN model is required in PYtorch or C. |
| Utilities based approach | Conversion of model structures between platforms is required E.g. Target Hardware Platform is not TFLM,(irrespective of whether pretrained DNN model is available or not, irrespective of whether training data is available or not | | |

**Input parameters:**

• target hardware metric constraints of a target edge device

Optional:
• training dataset
• pretrained DNN model

⇧

**Data scientist, Domain experts**

**recommended technique**

**Confirmation/ modification on recommended technique**

**Optimized DNN model generation**

**Deployment of Optimized DNN model on target edge device**

**FIG. 1B**

18

200

receiving a plurality of input parameters comprising a target hardware metric constraints of a target edge device, and at least one of i) a training dataset, and ii) a pretrained DNN model trained for a target application, wherein the pretrained DNN model exceeds the target hardware metric constraints — 202

selecting one of i) a Fast- Neural Architecture Search (F-NAS) based optimization technique and ii) a non-F-NAS based optimization technique for generating an optimized DNN model, based on availability of the training dataset, availability of the pretrained DNN model, and the target hardware metric constraints, and wherein the F-NAS based optimization technique comprises i) a Fast- Neural Architecture Search (F-NAS), and ii) a LTH + F-NAS; and the non-F-NAS based optimization technique comprises i) a EvoPrune technique, ii) a Lottery Ticket Hypothesis (LTH), iii) and an utilities based approach in accordance with the target application — 204

A

**FIG. 2A**

200

(A)

generating the optimized DNN model by selecting a F-NAS based optimization technique comprising one of:

LTH+F-NAS if the pretrained DNN model is available and the training dataset is available, wherein the pretrained DNN model is distilled using the LTH pipeline and passed to the F-NAS in form of a student model to generate a search space; and the F-NAS directly if the pretrained DNN model is unavailable and the training dataset is available, the F-NAS comprising:

(i)receiving the plurality of input parameters (206a)
(ii)initializing a RL search space based on a default search space or the student model (206b)
(iii)initializing hyperparameters based on default values or values derived from user inputs (206c)
(iv)receiving a ratio of a Scaled Hamming Distance (SHD) episodes among a total number of episodes(206d)
(v) initializing a set of default hyperparameters for model training and evaluation for intermediate models generated during a NAS process (206e)
(vi)generating the optimized DNN model by combining a RL-based NAS technique with a SHD based metric that reduces a search time, wherein the hamming distance based metric is scaled between bounds 0 to 1 to be used in a RL-NAS reward (sigmoid based multi-objective reward function)(206f)

206

deploying the optimized DNN model on the target edge device to run the target application

208

**FIG. 2B**

Search space
components for all
task options

Default search
space configs for
different tasks

Generalized RL based NAS framework (3 modes of operation)

If SHD episodes==0.0: use training dependent eval metric in reward function

If SHD episodes==1.0: use Hamming Distance based (training free eval metric) in reward function

If SHD episodes==Explore episodes: use both metrics, SHD based reward during explore episodes & train dependent reward during exploit episodes

Training Data & Task description

Multiobjective constraints & priorities (metric weightage & min/max values)

Target Device Configuration

NAS RL hyper-parameters (total episodes, explore, episodes, SHD episodes, epsilon, alpha, gamma)

OPTIONAL

Skeleton Model - Sparse model

Final Model

Train the highest reward model with AutoML (HPO) & Quantize if required

Initialize RL search agent with search space & model evaluation config

Explore Episode phase: random sample models, calculate evaluation metrics & store in memory

If last episode of explore episodes: use stored statistics for each episode to set weight & scaling factor for metrics in multi-obj reward function

An early exit strategy is used to expedite the search process. We early exit case our search reaches reward value, which is a function of the input device constraints and target metrics

Agent Memory (state-action pairs, model arch, eval metrics, multi-obj reward)

Exploit Episode phase: random sample models, calculate evaluation metrics & store in memory

RL Multi-obj optimization (use SHD-based eval metric, calc model size, MAC, reward & train Deep-Q Model)

**FIG. 3**

Europäisches
Patentamt

European
Patent Office

Office européen
des brevets

# EUROPEAN SEARCH REPORT

Application Number

EP 24 19 8613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CAI HAN HANCAI@MIT EDU ET AL: "Enable Deep Learning on Mobile Devices: Methods, Systems, and Applications", ACM TRANSACTIONS ON DESIGN AUTOMATION OF ELECTRONIC SYSTEMS, ACM, NEW YORK, NY, US, vol. 27, no. 3, 4 March 2022 (2022-03-04), pages 1-50, XP058690557, ISSN: 1084-4309, DOI: 10.1145/3486618 * Title, Abstract * * 1,3,4.2,5,5.1,6.1,7.1-7.2,8 * * figures 1,3-4 * | 1-15 | INV. G06N3/0985 |
| A | TAN MINGXING ET AL: "MnasNet: Platform-Aware Neural Architecture Search for Mobile", 2019 IEEE/CVF CONFERENCE ON COMPUTER VISION AND PATTERN RECOGNITION (CVPR), IEEE, 15 June 2019 (2019-06-15), pages 2815-2823, XP033687287, DOI: 10.1109/CVPR.2019.00293 [retrieved on 2020-01-08] * Abstract * * 3.2 * | 5,10,15 | |
| A | JAVIER POYATOS ET AL: "EvoPruneDeepTL: An Evolutionary Pruning Model for Transfer Learning based Deep Neural Networks", ARXIV.ORG, CORNELL UNIVERSITY LIBRARY, 201 OLIN LIBRARY CORNELL UNIVERSITY ITHACA, NY 14853, 8 February 2022 (2022-02-08), XP091151845, * the whole document * | 3,8,13 | |

TECHNICAL FIELDS SEARCHED (IPC)

G06N

The present search report has been drawn up for all claims

| Place of search | Date of completion of the search | Examiner |
|---|---|---|
| The Hague | 20 February 2025 | Veynachter, Alexis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202321067480
- IN 202221043520
- IN 202221022177
- IN 497675046
- IN 202321025696